# EUROPÄISCHE PATENTSCHRIFT

(11) **EP 1 334 821 B1**
(45) Veröffentlichungstag und Bekanntmachung des Hinweises auf die Patenterteilung: **22.11.2006**
(21) Anmeldenummer: 02001486.6
(22) Anmeldetag: 22.01.2002
(51) Int. Cl.: B32B 37/14, B32B 29/00, B32B 29/04, B32B 27/20, B32B 27/42

(54) **Verfahren und Vorrichtung zum Imprägnieren von dünnen Schichten mit härtbaren Flüssigkeiten**
Process and apparatus for impregnating thin layers with curable liquids
Procédé et dispositif pour l'imprégnation de couches minces à l'aide de liquides durcissables

(43) Veröffentlichungstag der Anmeldung: 13.08.2003
(73) Patentinhaber: Thermopal GmbH, 88299 Leutkirch im Allgäu (DE)
(72) Erfinder: Peter, Anton, 88131 Lindau (DE); Maier, Melanie, 88410 Bad Wurzach (DE); Blendl, Susanne, 88167 Maierhöfen (DE)
(74) Vertreter: Eisele, Otten, Roth & Dobler

(56) Entgegenhaltungen:
- EP-A- 0 108 887
- EP-A- 0 355 829
- EP-A- 0 993 944
- DE-A- 19 939 060
- US-A- 4 159 355
- US-A- 5 906 788
- US-A- 6 106 654

## Beschreibung

Die Erfindung betrifft ein Verfahren und eine Vorrichtung zum Imprägnieren von dünnen Schichten mit härtbaren Flüssigkeiten nach dem Oberbegriff des Anspruchs 1 bzw. 7.

### Stand der Technik

Für die Herstellung von dekorativen Schichtsystemen, z.B. dekorativen Schichtstoffen oder dekorativen Verbundplatten, werden im Allgemeinen Papiere verwendet, die mit hitzehärtbaren Harzen getränkt bzw. imprägniert sind. Der Schichtstoff oder die direkt beschichtete Verbundplatte wird durch Verpressen vorzugsweise mehrerer imprägnierter Papiere, wovon regelmäßig mit einem dekorativem Papier die optische Wirkung erzielt wird, unter Druck und Hitze erzeugt. Dekorative Oberflächen können auch mittels sogenannter Finishfolien hergestellt werden. Außerdem lassen sich dekorative Schichtsysteme neben der häufig verwendeten thermischen Aushärtung auch mit flüssigkeitsgetränkten Lagen herstellen, die über UV/IR-Strahlung oder eine Elektronenstrahlung ausgehärtet werden.

Bei den direkt beschichteten Verbundplatten oder dünnen Schichtstoffen werden teilweise Overlaypapiere unterschiedlicher Grammatur und Beschaffenheit über eine dekorative Schicht gelegt, um z.B. eine abriebfeste Oberfläche zu erzielen. Eine weitere Möglichkeit, eine abriebbeständige Oberfläche zu erhalten, stellt das sogenannte "Flüssigoverlay" dar, bei welchem ein Harz mit vorzugsweise abrasiven Partikeln direkt auf die dekorative Schicht aufgebracht wird.

Gängige Auftragverfahren weisen insbesondere im Zusammenhang mit der Verwendung von abrasiven Partikeln Nachteile auf. Z.B. lassen sich geringe Mengen von abrasiven Partikeln im "Flüssigoverlay" nur schwer realisieren. Darüber hinaus können Schwankungen der Partikeldichte auftreten, was im Hinblick auf hohe Qualitätsanforderungen nicht tolerierbar ist.

Der Einsatz von Overlaypapieren ist normalerweise kostenintensiv, da sie zugekauft und mit härtbaren Flüssigkeiten getränkt werden müssen.

Eine Vorrichtung zum Auftrag einer dünnen Fixiermittelschicht auf ein dünnes, ungewobenes Fließ aus zusammengepressten, losen Fasern ist aus der US 4, 159, 355 bekannt.

### Aufgabe und Vorteile der Erfindung

Der Erfindung liegt die Aufgabe zugrunde, mit einer härtbaren Flüssigkeit imprägnierte Schichten für dekorative Schichtsysteme mit vergleichsweise höherer Qualität und rationeller, insbesondere im Zusammenhang mit der Verwendung von harten Partikeln, bereitzustellen.

Diese Aufgabe wird durch die Merkmale des Anspruchs 1 und 7 gelöst.

In den Unteransprüchen sind vorteilhafte und zweckmäßige Weiterbildungen der Erfindung angegeben.

Zunächst geht die Erfindung von einem Verfahren zur Herstellung von mit einer härtbaren Flüssigkeit imprägnierten dünnen Schicht für dekorative Schichtsysteme aus, bei welchen das dünne Schichtmatrial mit der härtbaren Flüssigkeit versehen wird. Bei den dekorativen Schichtsystemen handelt es sich um HPL (High Pressure Laminate), CPL (Continuous Pressure Laminate) oder beschichtete Verbundplatten, insbesondere direkt beschichtete Verbundplatten. Unter imprägnierter dünner Schicht wird im Sinne der Erfindung insbesondere eine Schicht aus Papier oder eine Folie aus verschiedenen Materialien, wie z.B. Kunststoff oder Metall verstanden. Am häufigsten verbreitet ist im Zusammenhang mit dekorativen Schichten die Verwendung von Papier, das eine härtbare Flüssigkeit, wie z.B. Melaminharz, gut aufnimmt. Der Kern der Erfindung liegt nun darin, dass die härtbare Flüssigkeit zunächst aufgeschäumt und der Schaum auf die zu imprägnierende Schicht aufgetragen wird. Schaum hat die Eigenschaft, aufgrund der geringen Oberflächenspannung im Vergleich zu einer ungeschäumt aufgebrachten Flüssigkeit besser durch das entsprechende Material zu penetrieren. Als härtbare Flüssigkeit kann z.B. mit Additiven versetztes wässriges Melaminharz verwendet werden. Es sind jedoch auch andere hitzehärtbare, UV- oder IR-lichthärtbare bzw. elektronenstrahlhärtbare Flüssigkeiten denkbar.

Besonders vorteilhaft lässt sich der Schaum einsetzen, wenn in diesem harte mineralische Partikel, z.B. Korund, eingemischt werden. Der Schaum fungiert dabei als Träger dieser mineralischen Bestandteile, die im Schaum eingelagert und in der Schwebe gehalten werden. Damit lässt sich zunächst eine ausgewogene Verteilung der Partikel im Schaum erzielen und wenn der Schaum gleichmäßig auf die Oberfläche einer Schicht aufgebracht wird, letztlich eine homogene Verteilung der Partikel auf dieser Oberfläche. Der Schaum kann auf eine bereits beschichtete Schicht, z.B. getränktes Papier oder auf ein Rohmaterial, z.B. Rohpapier aufgetragen werden. Partikel wie z.B. Korund sollen der Schicht eine hohe Abriebsfestigkeit verleihen.

Der Auftrag von insbesondere harten, abrasiv wirkenden Partikeln mit Hilfe des Schaums hat nicht nur den Vorteil, dass sich ein homogener Auftrag erzielen lässt. Darüber hinaus ist es möglich, eine gute Optik zu erreichen. Außerdem lassen sich einfach unterschiedliche Mengen, Größen und Formen von Partikeln im Schaum und damit in der Schicht einstellen, womit unterschiedlich abriebfeste Oberflächen leicht herstellbar sind. Der Schaum kann unterschiedliche Konsistenzen bzw. Schaumgewichte haben. Je geringer das Schaumgewicht, desto stabiler ist der Schaum, und umso besser werden Partikel in der Schwebe gehalten.

Beim Schaumauftrag hat sich gezeigt, dass der Schaum nach dem Aufbringen auf der dünnen Schicht, z.B. auf einem Papier schnell ohne eine unerwünschte Blasenbildung in einen sehr homogenen glatten "Überzug" zerfällt.

In einer besonderen bevorzugten Ausgestaltung der Erfindung wird die härtbare Flüssigkeit vor dem Aufschäumen mit Partikeln gemischt. Im Anschluss daran wird die Mischung ausgeschäumt. Dies gewährleistet eine homogene Verteilung der Partikel.

Für die Weiterverarbeitung ist es in der Regel notwendig, dass die mit Schaum versehende dünne Schicht nach Zerfallen des Schaums zum Erreichen einer definierten Restfeuchte getrocknet wird.

Um Spannungen in der mit der härtbaren Flüssigkeit versehenen dünnen Schicht zu vermeiden, bzw. bei einem anschließenden Pressvorgang die Pressbleche durch die abrasive Wirkungen von in der härtbaren Flüssigkeit eingelagerten Partikeln nicht zu verschleißen, wird überdies vorgeschlagen, dass auf die dünne Schicht ein- oder beidseitig wenigstens eine weitere Lage einer härtbaren Flüssigkeit aufgetragen wird. Vorzugsweise wird die wenigstens eine weitere Lage zur Einstellung einer definierten Restfeuchte getrocknet. Die zusätzliche Lage erhöht überdies die Abriebsfestigkeit und bettet die abrasiven Partikel ein.

Im Weiteren bezieht sich die Erfindung auf eine Vorrichtung zum Imprägnieren von dünnen Schichten für dekorative Schichtsysteme mit härtbaren Flüssigkeiten, die Auftragmittel zum Aufbringen der härtbaren Flüssigkeit auf eine Schichtoberfläche aufweist, wobei die Auftragmittel einen Schaumerzeuger zur Herstellung von Schaum aus der aufzubringenden härtbaren Flüssigkeit und eine Schaumauftrageinrichtung umfassen. Vorzugsweise wird an der Schaumauftrageinrichtung die dünne Schicht, z.B. das Papier vorbeigeführt. Die Schaumauftrageinrichtung und der Schaumerzeuger können als eine Einheit realisiert werden. In einer bevorzugten Ausgestaltung umfasst der Schaumerzeuger einen Mixer.

Um das Beimischen von Additiven zur härtbaren Flüssigkeit zu ermöglichen, liegt der wesentliche Aspekt bei der Vorrichtung darin, dass dem Schaumerzeuger ein Mischer vorgeschaltet ist. Durch den Mischer lassen sich Additive, z.B. Partikel homogen in der härtbaren Flüssigkeit vor der Schaumerzeugung verteilen.

Für die in Frage kommenden härtbaren Flüssigkeiten, insbesondere jedoch für hitzehärtbare Kunstharze, wie z.B.

Melaminharz, zerfällt der aus der Flüssigkeit gebildete Schaum unmittelbar nach dem Aufbringen auf der Schichtoberfläche und es verbleibt lediglich ein homogener Flüssigkeitsbelag. Um diesen für eine Weiterverarbeitung vorzubereiten, ist es bevorzugt, dass der Schaumauftrageinrichtung ein Trockner nachgeschaltet ist. Vorteilhafterweise läuft die beschichtete, dünne Schicht, z.B. eine Papierlage, durch den Trockner hindurch.

In einer besonders bevorzugten Ausgestaltung der Erfindung ist die Schaumauftrageinrichtung ein Aggregat mit schlitzförmiger Austrittsöffnung für den Schaum zum Aufbringen von Schaum auf eine quer sich dazu bewegende Oberfläche.

Insbesondere beim Aufbringen von härtbaren Flüssigkeiten mit eingemischten Partikeln ist es überdies bevorzugt, wenn eine verwendete dünne Schicht, z.B. ein Papier vor dem Auftrag durch z.B. beidseitiges Tränken vorimprägniert wird. Für diesen Fall wird der Schaumauftrageinrichtung ein Aggregat zum Vorimprägnieren vorgeschaltet.

Um einen weiteren Schichtauftrag auf eine bereits aufgebrachte Lage aus härtbarer vorgetrockneter Flüssigkeit zu ermöglichen, ist es außerdem bevorzugt, wenn nach der Schaumauftrageinrichtung und einem ersten Trockner eine weitere Auftragvorrichtung vorgesehen ist. Dieser Anordnung folgt in der Regel verfarhensbedingt nochmals ein Trockner. Damit kann die dünne Schicht, z.B. ein Papier, möglichst schnell für einen weiteren Arbeitsschritt konditioniert werden.

### Zeichnungen

Zwei Ausführungsbeispiele der Erfindung sind in den Zeichnungen dargestellt und unter Angabe weiterer Vorteile und Einzelheiten näher erläutert. Es zeigen
- Figur 1: in einer schematischen Schnittdarstellung den prinzipiellen Aufbau eines imprägnierten, mit einer abriebfesten Lage versehenen Papiers und
- Figur 2: eine Vorrichtung zur Herstellung eines Papiers gemäß Figur 1 in einer schematischen Blockdarstellung.

### Beschreibung der Ausführungsbeispiele

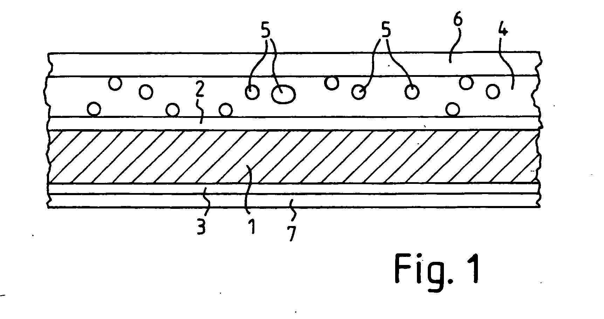

Figur 1 zeigt in Schnittdarstellung ein Papier 1, das beidseitig mit einer Kunstharzlage 2, 3 durchtränkt und/oder vorimprägniert sein kann. Auf der einem Benutzer zugewandten Seite ist eine weitere Lage 4 mit gleichmäßig in der Schicht verteilten Korundpartikeln 5 aufgebracht. Hierdurch werden besonders hohe Abriebwerte in der Schicht erreicht.

Zusätzlich ist dieser Schichtaufbau ein- oder beidseitig nochmals mit einer Lage 6 und/oder 7 aus Kunstharz, z.B. Melaminharz versehen.

Ein auf diese Weise beschichtetes Papier 1 wird z.B. für die Herstellung eines Schichtsystems verwendet, das für Bereiche mit besonders hohen Abriebsanforderungen vorgesehen ist. Beispielsweise wird das Schichtsystem als Schichtstoff auf eine Trägerplatte aufgebracht und als Fußbodenelement oder als mechanisch besonders widerstandsfähige Tischplatte eingesetzt.

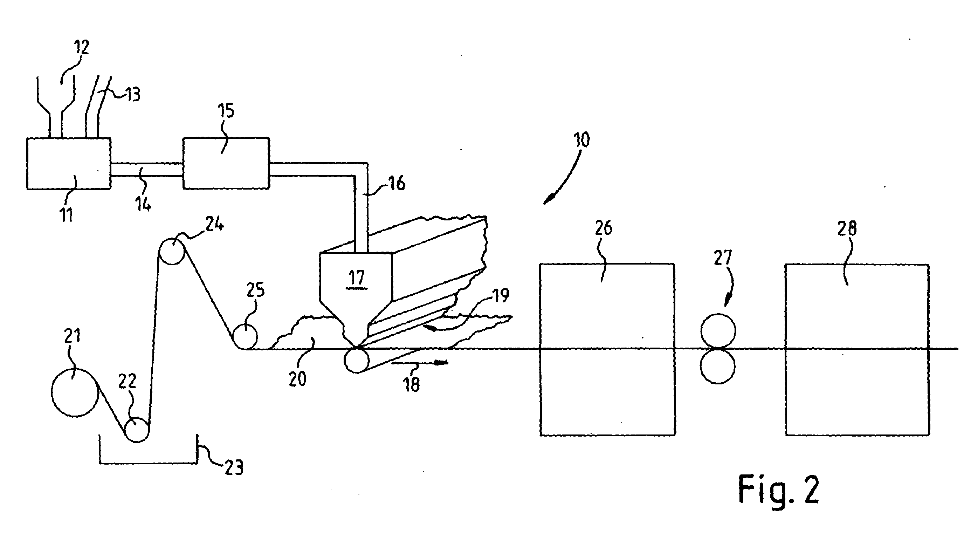

Figur 2 zeigt die schematische Darstellung einer Vorrichtung 10 zur Herstellung von z.B. imprägniertem Papier gemäß Figur 1.

Die Vorrichtung 10 umfasst einen Mischer 11 mit einem Zuführstutzen 12 für z.B. Korundpartikel und einem Zuführstutzen 13 für z.B. Melaminharz. Im Mischer 11 werden Korundpartikel und Melaminharz homogenisiert. Anschließend wird die homogenisierte Mischung (auch Flotte genannt) über eine Verbindung 14 einem Mixer 15 zugeführt. Im Mixer 15 wird die Flotte aufgeschäumt. Der Schaum wird über eine weitere Verbindung 16 zu einem Auftragaggregat 17 transportiert. Das Auftragaggregat 17 hat quer zur Beschichtungsrichtung 18 eine schlitzförmige Öffnung 19 (siehe hierzu das schematisch räumlich dargestellte Auftragaggregat).

Der Schaum wird durch die schlitzförmige Öffnung 19 auf eine in Beschichtungsrichtung 18 an der schlitzförmigen Öffnung 19 vorbeilaufende Papierbahn 20 aufgebracht. Die Papierbahn 20 läuft von einer Rolle 21 ab und wird zunächst an einer Umlenkwalze 22 in einer Wanne 23 mit z.B. Melaminharz getränkt, d.h. beidseitig vorimprägniert. Über zwei weitere Umlenkwalzen 24, 25 erreicht das vorimprägnierte Papier den Auftragschlitz des Auftragaggregats 17.

Hier wird, wie oben beschrieben, der mit Korund durchmischte Melaminschaum auf die Papierbahnoberseite aufgebracht. Der Schaum zerfällt, bevor die Papierbahn einen Trockner 26 erreicht, in dem das Melaminharz mit Korundpartikeln auf eine vorgegebene Restfeuchtigkeit getrocknet wird.

Durch die Verwendung des Melaminschaums lässt sich zunächst eine sehr hohe Flächengleichmäßigkeit der Dichte von Korundpartikeln in der Melaminschicht erreichen. Darüber hinaus bleiben, solange der Schaum nicht zerfallen ist, die Korundpartikel ortsfest in der Schaumlage positioniert. Nach zerfallenem Schaum wird die Melaminharzschicht mit Korundpartikel getrocknet, bevor diese sich in einer Richtung senkrecht zur Schicht, d.h. Papierbahnoberfläche absetzen können. Dadurch wird auch über die Dicke der Melaminharzschicht eine gleichmäßige Verteilung von Korundpartikeln erreicht.

Nach dem Trockner wird über ein weiteres Auftragaggregat 27 ein- oder beidseitig eine weitere Melaminharzschicht auf die Papierbahn aufgetragen und in einem nachgeschalteten Trockner 28 auf eine vorgegebene Restfeuchtigkeit getrocknet. Im Weiteren kann die Papierbahn 20 entweder aufgerollt oder auf ein bestimmtes Maß abgelängt werden, um dann z.B. in einer Presse weiterverarbeitet zu werden.

Die Vorrichtung 10 ist lediglich beispielhaft zu verstehen. Einzelne Bestandteile der Vorrichtung sind nicht unbedingt notwendig, um eine erfindungsgemäß imprägnierte Schicht zu erzeugen. Beispielsweise ist es auch denkbar, dass Tränkwerk 22, 23 ganz durch einen Schaumauftrag zu ersetzen. Im Wesentlichen kommt es darauf an, dass aufgeschäumtes Kunstharz aufgebracht wird, das erstens besser in eine aufgebrachte Schicht penetriert, und zweitens bei der Anwendung von eingemischten Partikeln für eine gleichmäßige Verteilung von Partikeln im Schaum und der nachfolgenden schaumfreien Schicht sorgt.

### Bezugszeichenliste:

- 1: Papier
- 2: Vorimprägnierung
- 3: Vorimprägnierung
- 4: Harzlage mit Korund
- 5: Korundpartikel
- 6: Decklage aus Harz
- 7: Decklage aus Harz
- 10: Vorrichtung
- 11: Mischer
- 12: Einführstutzen
- 13: Einführstutzen
- 14: Verbindung
- 15: Mixer
- 16: Verbindung
- 17: Auftragaggregat
- 18: Beschichtungsrichtung
- 19: schlitzförmige Öffnung
- 20: Papierbahn
- 21: Rolle
- 22: Umlenkwalze
- 23: Wanne
- 24: Umlenkwalze
- 25: Umlenkwalze
- 26: Trockner
- 27: Auftragaggregat
- 28: Trockner

## Patentansprüche

1. Verfahren zur Herstellung von mit einer härtbaren Flüssigkeit imprägnierten dünnen Schicht für dekorative Schichtsysteme eines HPLs (High Pressure Laminate), CPLs (Continuous Pressure Laminate) oder einer beschichteten Verbundplatte, bei welchem die dünne Schicht (1) mit der härtbaren Flüssigkeit versehen wird, **dadurch gekennzeichnet, dass** die härtbare Flüssigkeit aufgeschäumt und der Schaum auf die zu imprägnierende Schicht (1) aufgetragen wird.

2. Verfahren nach Anspruch 1, **dadurch gekennzeichnet, dass** ein Schaum aus härtbarer Flüssigkeit und Partikeln hergestellt wird.

3. Verfahren nach Anspruch 1 oder 2, **dadurch gekennzeichnet, dass** die härtbare Flüssigkeit vor dem Aufschäumen mit Partikeln gemischt wird.

4. Verfahren nach einem der vorhergehenden Ansprüche, **dadurch gekennzeichnet, dass** die mit dem Schaum versehene dünne Schicht nach Zerfallen des Schaums getrocknet wird.

5. Verfahren nach einem der vorhergehenden Ansprüche, **dadurch gekennzeichnet, dass** auf die dünne Schicht (1) ein- oder beidseitig wenigstens eine weitere Lage (6, 7) einer härtbaren Flüssigkeit aufgetragen wird.

6. Verfahren nach Anspruch 5, **dadurch gekennzeichnet, dass** die wenigstens eine weitere Lage (6, 7) getrocknet wird.

7. Vorrichtung zum Imprägnieren von dünnen Schichten (1) für dekorative Schichtsysteme eines HPLs (High Pressure Laminate), CPLs (Continuous Pressure Laminate) oder einer beschichteten Verbundplatte mit härtbaren Flüssigkeiten, die Auftragmittel zum Aufbringen der härtbaren Flüssigkeit auf eine Schichtoberfläche aufweist, wobei die Auftragmittel einen Schaumerzeuger (15) zur Herstellung von Schaum aus der aufzubringenden härtbaren Flüssigkeit und eine Schaumauftrageinrichtung (17) umfassen, **dadurch gekennzeichnet, dass** dem Schaumerzeuger (15) ein Mischer (11) zum Beimischen von Additiven zur härtbaren Flüssigkeit vorgeschaltet ist.

8. Vorrichtung nach Anspruch 7, **dadurch gekennzeichnet, dass** der Schaumauftrageinrichtung (17) ein Trockner (26) nachgeschaltet ist.

9. Vorrichtung nach einem der Ansprüche 7 oder 8, **dadurch gekennzeichnet, dass** die Schaumauftrageinrichtung (17) ein Aggregat mit schlitzförmiger Austrittsöffnung (19) zum Aufbringen von Schaum auf eine quer sich dazu bewegende Oberfläche umfasst.

10. Vorrichtung nach einem der Ansprüche 7 bis 9, **dadurch gekennzeichnet, dass** der Schaumauftrageinrichtung (17) ein Aggregat (22, 23) zum Vorimprägnieren der dünnen Schicht vorgeschaltet ist.

11. Vorrichtung nach einem der Ansprüche 7 bis 10, **dadurch gekennzeichnet, dass** nach der Schaumauftrageinrichtung (17) ein weiteres Auftragaggregat (27) vorgesehen ist.

## Claims

1. Process for producing thin layers impregnated with a curable liquid for the decorative layer systems of an HPL (High Pressure Laminate), CPL (Continuous Pressure Laminate) or coated composite board, in which the thin layer (1) is provided with the curable liquid, **characterised in that** the curable liquid is foamed and the foam is applied onto the layer (1) to be impregnated.

2. Process according to claim 1, **characterised in that** a foam comprising curable liquid and particles is produced.

3. Process according to claim 1 or 2, **characterised in that** the curable liquid is mixed with particles before foaming.

4. Process according to one of the preceding claims, **characterised in that** the thin layer provided with the foam is dried after the breakdown of the foam

5. Process according to one of the preceding claims, **characterised in that** at least one further layer (6, 7) of curable liquid is applied onto the thin layer (1) on one or both sides.

6. Process according to claim 5, **characterised in that** the at least one further layer (6, 7) is dried.

7. Apparatus for impregnating thin layers (1) for decorative layer systems of an HPL (High Pressure Laminate), CPL (Continuous Pressure Laminate) or coated composite board with curable liquids, which consists of application means for applying the curable liquid onto a layer surface, whereby the application means comprise a foam generator (15) for producing foam from the curable liquid to be applied and a foam application device (17), **characterised in that** a mixer (11) for mixing additives into the curable liquid is connected upstream of the foam generator (15).

8. Apparatus according to claim 7, **characterised in that** a drier (26) is connected downstream of the foam application device (17).

9. Apparatus according to one of claims 7 or 8, **characterised in that** the foam application device (17) comprises a unit with a slit-shaped outlet opening (19) for applying foam onto a surface moving perpendicular thereto.

10. Apparatus according to one of claims 7 to 9, **characterised in that** a unit (22, 23) for pre-impregnating the thin layer is arranged upstream of the foam application device (17).

11. Apparatus according to one of claims 7 to 10, **characterised in that** after the foam application device (17) an additional application unit (27) is provided.

## Revendications

1. Procédé pour fabriquer une couche mince imprégnée d'un liquide durcissable pour des systèmes de couches décoratifs d'un stratifié haute pression (High Pressure Laminate), d'un stratifié à pression continue (Continuous Pressure Laminate) ou d'un panneau composite revêtu, dans lequel la couche mince (1) est pourvue du liquide durcissable,
**caractérisé en ce que** le liquide durcissable est moussé et **en ce que** la mousse est appliquée sur la couche à imprégner (1).

2. Procédé selon la revendication 1,
**caractérisé en ce que** la mousse est fabriquée à partir d'un liquide durcissable et de particules.

3. Procédé selon la revendication 1 ou 2,
**caractérisé en ce que** le liquide durcissable est mélangé aux particules avant le moussage.

4. Procédé selon l'une des revendications précédentes,
**caractérisé en ce que** la couche mince pourvue de la mousse est séchée après désagrégation de la mousse.

5. Procédé selon l'une des revendications précédentes,
**caractérisé en ce qu'**au moins une autre couche (6, 7) d'un liquide durcissable est appliquée sur la couche mince (1) sur un côté ou sur les deux côtés.

6. Procédé selon la revendication 5,
**caractérisé en ce qu'**au moins l'autre couche (6, 7) est séchée.

7. Dispositif pour imprégner des couches minces (1) pour des systèmes de couches décoratifs d'un stratifié haute pression (High Pressure Laminate), d'un stratifié à pression continue (Continuous Pressure Laminate) ou d'un panneau composite revêtu avec des liquides durcissables, lequel dispositif présente des moyens d'application pour appliquer le liquide durcissable sur la surface d'une couche, les moyens d'application comprenant un générateur de mousse (15) pour fabriquer de la mousse à partir du liquide durcissable à appliquer ainsi qu'un dispositif d'application de mousse (17),
**caractérisé en ce qu'**un mélangeur (11) est agencé en amont du générateur de mousse (15) pour ajouter des additifs au liquide durcissable.

8. Dispositif selon la revendication 7,
**caractérisé en ce qu'**un séchoir (26) est agencé en aval du dispositif d'application de mousse (17).

9. Dispositif selon l'une des revendications 7 ou 8,
**caractérisé en ce que** le dispositif d'application de mousse (17) comprend une unité ayant une ouverture de sortie (19) en forme de fente pour appliquer de la mousse sur une surface mobile transversalement par rapport à celle-ci.

10. Dispositif selon l'une des revendications 7 à 9,
**caractérisé en ce qu'**une unité (22, 23) est agencée en amont du dispositif d'application de mousse (17) afin de pré-imprégner la couche mince.

11. Dispositif selon l'une des revendications 7 à 10,
**caractérisé en ce qu'**il est prévu une autre unité d'application (27) après le dispositif d'application de mousse (17).
